Europäisches Patentamt

European Patent Office

Office européen des brevets

(11) Publication number: **0 392 801**
**A2**

## (12) EUROPEAN PATENT APPLICATION

(21) Application number: **90303843.8**

(22) Date of filing: **10.04.90**

(51) Int. Cl.5: **F01K 25/08**

(30) Priority: **10.04.89 JP 91568/89**

(43) Date of publication of application:
**17.10.90 Bulletin 90/42**

(84) Designated Contracting States:
**AT BE CH DE DK ES FR GB IT LI NL SE**

(71) Applicant: **UNION KOGYO KABUSHIKI KAISHA**
**3-19, 4-chome, Nunoichi-cho**
Higashi-Osaka-shi, Osaka-fu(JP)

(72) Inventor: **Matsuura, Takaaki**
**18-12, 3-chome, Yamate-dai**
**Ibaraki-shi, Osaka-fu(JP)**

(74) Representative: **Senior, Alan Murray et al**
**J.A. KEMP & CO 14 South Square Gray's Inn**
**London WC1R 5EU(GB)**

(54) Method for driving a prime mover using a refrigerant gas for generating electric power and for heating or cooling water.

(57) A driving method which comprises causing refrigerant gas contained under a high pressure in a tank to flow into pipes provided with check valves, passing the refrigerant gas into a prime mover, introducing the refrigerant gas discharged under a low pressure from the prime mover into refrigerant regulators, wherein the refrigerant gas, while being held at a fixed volume is heated to an elevated pressure which is a little higher than the aforementioned high pressure, returning the refrigerant gas to the tank while at an elevated pressure, thus circulating the refrigerant gas from the tank and back to the tank through the prime mover and refrigerant regulators, and continuously driving the prime mover. The method additionally comprises connecting an electric generator to the prime mover for generating electric power which may be used for a variety of purposes, including heating and/or cooling of water. Furthermore, the invention may additionally comprise introducing the refrigerant gas into an evaporator, wherein water is passed through the evaporator to carry out a heat exchange between the water and the refrigerant gas for cooling the water.

Fig. 1.

# METHOD FOR DRIVING A PRIME MOVER USING A REFRIGERANT GAS FOR GENERATING ELECTRIC POWER AND FOR HEATING OR COOLING WATER

The present invention relates to a driving method using a refrigerant gas. The present invention relates also to a method for generating electric power by setting an electric generator in motion using the driving method, and furthermore relates to a method for obtaining cold water utilizing the low temperature achieved by the process of the driving method, and still further relates to a method for obtaining hot water using electric power generated by the driving method.

For producing electric power, coal or petroleum has hitherto been used for driving a prime mover such as a turbine and piston. Electric power can be generated by hydroelectric or nuclear power, however, most of electric power today is generated through the combustion of coal or petroleum. As for sources of energy, therefore, it can be said that most of the prime movers in use today are driven using energy produced by coal and petroleum. In other words, coal and petroleum have been mainly used for driving prime movers.

Various drawbacks are brought about by conventional driving methods in which coal and petroleum are burnt for generating energy to set the prime mover in motion. First, a large scale apparatus is generally required for burning coal and petroleum, and thus this practice cannot be carried out on a household scale. Secondly, when coal and petroleum are burnt, they produce exhaust gases which pollute the air, and furthermore coal and petroleum power plants often produce noises and cause other public nuisances. Thirdly, driving methods which require burning of coal and petroleum are not very energy efficient. Fourthly, although at present they are available at a relatively low price, coal and petroleum are increasingly becoming short in supply, and such natural resources cannot be artificially reproduced. For the reasons mentioned above, conventional driving methods must be viewed as unsatisfactory for addressing the long term energy needs of the future.

Accordingly, the main aim of the present invention is to provide a method which reduces the above drawbacks, and which can set a prime mover into motion easily and efficiently, without requiring the burning of natural resources such as coal and petroleum, and accordingly without producing harmful exhaust gases and unpleasant noises.

The inventors have found that, if a refrigerant gas such as "FREON" is used as a driving medium, then a motive force sufficient to drive a prime mover can be generated by only a small temperature difference within the vicinity of the ambient temperature. Furthermore, the inventors have found that such a small temperature difference can be obtained by action between the refrigerant gas and the air or water existing in the surrounding environment. The present invention has been completed on the basis of such findings.

The present invention is based on the principle that, when use is made of refrigerant gas for a driving medium, the pressure of the refrigerant gas can be greatly varied by only a small temperature difference as found in the air or water available in the surrounding environment, and therefore prime movers such as turbines and pistons can be driven by such a pressure change of the refrigerant gas. As the refrigerant gas, use can be made of halogenated hydrocarbons having a boiling point, for example, from -90$^\circ$C to -30$^\circ$C under ordinary pressure. When use is made of the refrigerant gases as exemplified above, the pressure thereof can be varied more than 4kg/cm$^2$ while the temperature is elevated from 0$^\circ$C to 30$^\circ$C. Furthermore, when the refrigerant gas is either compressed or expanded, it correspondingly generates either much heat or it absorbs much heat, thereby producing a temperature change, respectively. When advantage is taken of such temperature changes, water can be easily heated or cooled. The present invention thus makes good use of these relations.

Because a refrigerant gas under pressure must be used for a medium as obtaining a driving force in the present invention, the present invention requires that the refrigerant gas be available under pressure. The refrigerant gas under pressure may be made available by using electric power as a motive force and driving a piston to compress the refrigerant gas. In the present invention, however, it is intended that a source refrigerant gas under pressure be made available without using electric power, such as being supplied in a vessel or tank in a pre-pressurized condition, considering the case where electric power is not readily available.

The present invention is based on the principle that the refrigerant gas thus obtained has a pressure enough to drive a prime mover such as a turbine or piston. The present invention is further based on the principle that, if the refrigerant gas, which comes out of the prime mover and has a low pressure, is introduced into refrigerant regulators and heated therein by ambient air or water while being held at a given volume, then the refrigerant gas is brought to a state having a pressure a little higher than the original pressure of the refrigerant gas, and the refrigerant gas can then be returned to the original vessel. Thus, the present invention includes in principle the steps of causing the refrigerant gas to flow from the tank to the prime mover, then entering the refrigerant gas into refrigerant regulators to be heated by air or water to a higher pressure, and returning it to the original tank, thereby driving the prime mover continuously. The present invention is characterized by the feature that use is made of air or water at ordinary temperature for heating the refrigerant gas in the refrigerant regulators. At first, the refrigerant gas is in a liquid state when stored under pressure in a tank at room temperature, however, when discharged from the tank, the refrigerant gas evaporates and expands adiabatically, and the refrigerant gas coming from the tank acquires a temperature lower than ambient temperature, and thus a temperature difference is formed. The refrigerant gas coming from the tank can be heated by ambient air or water and can be increased in pressure. Thus, the refrigerant gas can be restored to a pressure sufficient to return it to the original tank by heating it with air or water at room temperature. Accordingly, when use is made of the refrigerant gas, ambient air or water can be used as a source of energy.

According to the present invention, there is provided a method of driving a prime mover comprising the steps of:
causing refrigerant fluid contained under a high pressure in a tank to flow into pipes provided with check valves, hence passing the refrigerant fluid into the prime mover, introducing the refrigerant fluid discharged at a low pressure from the prime mover into refrigerant regulators, wherein the refrigerant fluid, while at a fixed volume, is heated to attain an elevated pressure which is higher than said high pressure, and returning the refrigerant fluid to the tank while at said elevated pressure, thus continuously driving the prime mover.

The above and other aims and the attendant advantages of the present invention will become readily apparent by reference to the following detailed description of exemplary embodiments when considered with the accompanying drawings wherein:

Fig. 1 shows a schematic view of a driving method according to the present invention;

Fig. 2 shows a schematic view of a driving method according to a further embodiment of the present invention; and

Fig. 3 shows in schematic form a working example according to the method of the present invention.

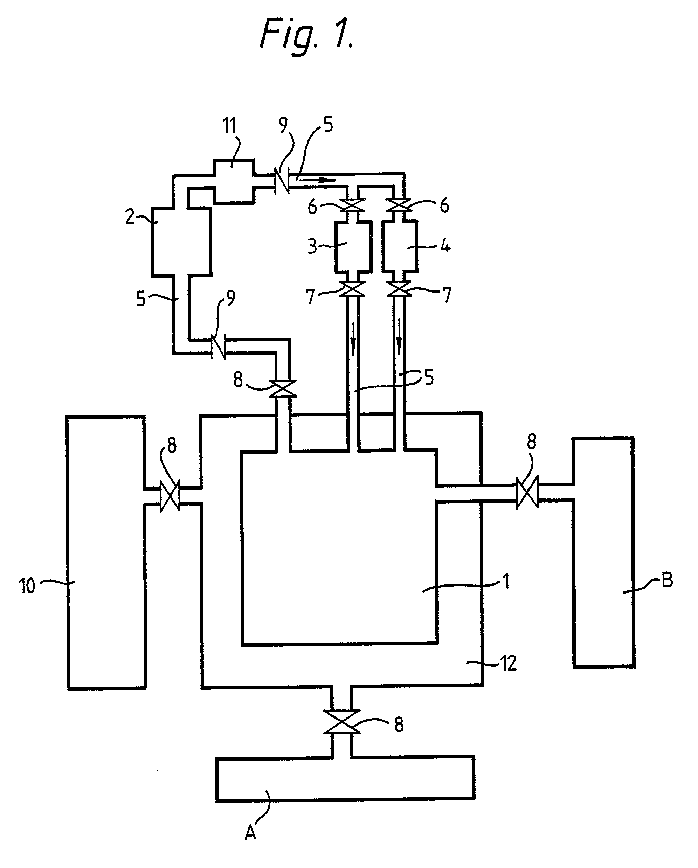

In Fig. 1, 1 denotes a tank, 2 a prime mover such as a turbine or piston, 3 and 4 denote refrigerant regulators, 5 pipes for directing the refrigerant gas, and 6 and 7 electro-magnetic valves for producing a pressure difference in the refrigerant gas. Pipes 5 are provided with valves 8 in appropriate places thereof for opening or closing passages therein and also with check valves 9 for preventing the refrigerant gas from flowing in the reverse direction, some of which valves are omitted in Fig. 1. Since pipes 5 are provided with check valves 9, the refrigerant gas flows only in the direction indicated by the arrows in pipes 5. A denotes a low temperature gas storage, for example liquid oxygen storage, B a refrigerant gas storage, 10 an air or water supply tank, 11 an expansion valve, and 12 an outside tank.

When a driving method is to be carried out according to the present invention, it is necessary that a refrigerant gas under pressure in tank 1 be made available. To this end, use may be made of a piston driven by a motor to compress the refrigerant gas and supply it into tank 1, or use may be made of a low temperature liquid such as liquid oxygen for supplying the refrigerant gas into tank 1 without using a compressing piston. Hereinbelow is explained a method wherein FREON 13 B 1 ($CBrF_3$) is used for the refrigerant gas and is supplied to tank 1 by means of liquid oxygen. Both tank 1 and outer tank 12 are at first deaerated, liquid oxygen is then supplied into outer tank 12, and the inside of tank 1 is cooled to a temperature, for example, of about -60° C. Subsequently, tank 1 is connected to refrigerant gas storage B containing FREON 13 B 1 at room temperature. Then, since the inside of tank 1 is at a temperature and a pressure lower than that of the inside of storage B, the FREON 13 B 1 flows from storage B into tank 1, and is stored therein in a liquid state. When the FREON 13 B 1 is thus moved into tank 1 and accounts for one third to two thirds of the volume of the tank, a valve 8 is closed, and the liquid oxygen is then discharged from outer tank 12, and instead, air or water at ordinary temperature, for example water at 16° C, is supplied into outer tank 12. FREON 13 B 1 contained in tank 1 is then evaporated and thus a refrigerant gas under pressure is made available.

Subsequently the air is evacuated from all of pipes 5, prime mover 2 and refrigerant regulators 3 and 4, and then valve 8 provided at the outlet of tank 1 is opened to allow the refrigerant gas to flow from tank 1 into pipes 5. At this time FREON 13 B 1 flows from tank 1 to prime mover 2, and has a temperature and pressure, for example, of 14° C and 14 kg/cm². In cases where a turbine is used as the prime mover 2, an expansion valve 11 is not required, however, in cases where a piston is used as the prime mover 2, an expansion valve 11 must be provided at the forward end of the prime mover to decrease the pressure therein and to allow the piston to work smoothly, in addition to enabling the refrigerant gas to advance smoothly to refrigerant regulators 3 and 4. For example, after having passed through driven prime mover 2, the FREON 13 B 1 becomes lowered in temperature and pressure, for example, by about 6°C and 10kg/cm², and, in this state, the FREON is supplied into refrigerant regulators 3 and 4.

Each of the refrigerant regulators 3 and 4 is a kind of heat exchanger, which is provided with electro-magnetic valves 6 and 7 at the inlet and outlet thereof to produce a pressure difference in the refrigerant gas. The refrigerant regulators elevate the pressure of the refrigerant gas by heating the refrigerant gas while holding the gas at a fixed volume. For this purpose, the valves 6 and 7 are closed and the refrigerant gas confined between both valves 6 and 7 is heated. The refrigerant regulators, therefore, do not allow the refrigerant gas to proceed through pipes 5 during the heating thereof. Thus, each of the refrigerant regulators passes the refrigerant gas only intermittently, and not continuously. Accordingly, in order to set the prime mover into motion continuously, it is necessary to provide a plurality of refrigerant regulators in a parallel relation, and to adjust them so that each regulator discharges the refrigerant gas by opening valves 7 at equal alternating intervals with respect to other regulators.

Refrigerant regulators 3 and 4 heat the refrigerant gas therein, and it is sufficient if the medium for heating the refrigerant gas is present at a temperature only slightly higher than that of the refrigerant gas itself, because the refrigerant gas experiences a large pressure change due to only a slight temperature difference within the vicinity of its ordinary temperature. For example, FREON 13 B 1 having a pressure of 10kg/cm² at 6°C in the refrigerant regulator can be changed to a pressure of 15kg/cm², if water at only 16°C is passed into the refrigerant regulator to elevate the temperature of the FREON 13 B 1 up to 15°C. FREON 13 B 1, therefore, is transformed to state having a pressure sufficient for returning the FREON to tank 1. Thus, in this state, the FREON 13 B 1 can be returned to tank 1 when valve 7 is opened.

Accordingly, the refrigerant gas flows out of tank 1, enters into prime mover 2 and refrigerant regulators 3 and 4, and can be returned to tank 1, whereby the refrigerant gas drives the prime mover 2 continuously during circulation as mentioned above.

According to the present invention, since the refrigerant gas is supplied in a gaseous state under pressure from the tank 1 through the pipes 5 provided with check valves 9 and drives the prime mover 2 by the pressure thereof, and due to the characteristic that the refrigerant gas exhibits a great pressure when contained at room temperature and also undergoes a great pressure difference due to only a slight change in the temperature thereof from the vicinity of its ordinary temperature, it becomes possible for the refrigerant gas to be returned to the original tank by heating it only slightly, and hence the prime mover is driven satisfactorily due to only a slight temperature difference within the vicinity of room temperature. Moreover, since the refrigerant gas under pressure has the characteristic that it exhibits a greatly increased pressure by heating it slightly with ambient air or water, and because the refrigerant gas discharged from the prime mover has a comparatively low pressure and temperature, it becomes possible for the refrigerant gas to be discharged from the prime mover 2 and returned to the tank without difficulty by entering and heating the refrigerant gas in the refrigerant regulators 3, 4 with air or water. Thus, the refrigerant gas can be circulated such that it flows from the tank, passes into the prime mover and refrigerant regulators, and returns to the tank, thereby driving the prime mover continuously. The present invention, therefore, brings about the advantage that the prime mover can be driven with good efficiency by a simple apparatus, without producing unpleasant combustion gases and noises. The present invention therefore achieves remarkable effects and advantages, as mentioned above.

Fig. 1 shows a driving method in which the prime mover 2 is driven by the pressure of the refrigerant gas according to a simple mechanism. In practice, it has been discovered that, when the refrigerant gas is supplied from tank 1, the pressure thereof is not sufficient to carry out the above method smoothly. Particularly, it has been found that the pressure of the refrigerant gas can be desirably elevated prior to entering into the prime mover by providing preliminary regulators, which are similar to the refrigerant regulators 3 and 4 and located at a site between the tank 1 and the prime mover 2. Furthermore, it has also been found desirable to store the refrigerant gas in a large amount before supplying it into the prime mover 2 in order to drive the prime mover 2 smoothly. Thus an improvement has been made in which preliminary regulators and a condenser are installed in this order between the tank 1 and the prime mover 2. This is a first improvement over the embodiment disclosed in relation to Fig. 1.

Moreover, in the driving method shown in Fig. 1, a single expansion valve 11 alone is provided at the forward end of the prime mover 2 in order for the refrigerant gas to flow therethrough. In practice, it has been found that the expansion valve 11 alone is not sufficient to smoothly carry out the driving method. Particularly, it has been found desirable to provide an evaporator at the forward end of the expansion valve 11. More particularly, the refrigerant gas discharged from the expansion valve becomes further expanded in the evaporator decreasing the pressure thereof, and a large amount of the refrigerant gas is temporarily stored in the evaporator under a low pressure. Thus, a further improvement has been made in which the evaporator is installed between the expansion valve 11 and the refrigerant regulators 3 or 4. This is a second improvement over the embodiment disclosed in relation to Fig. 1.

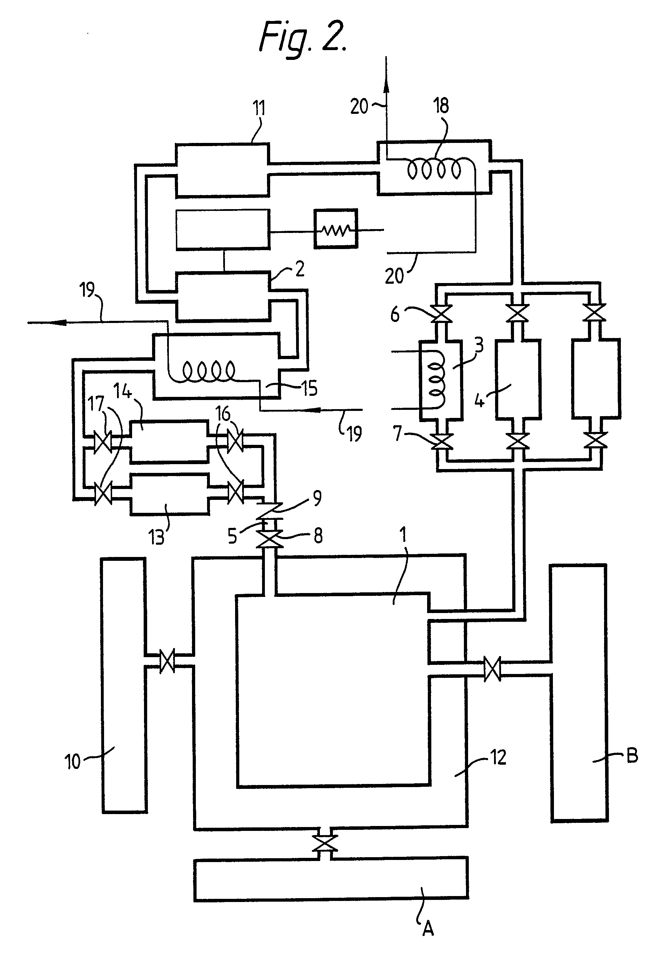

Fig. 2 shows an improved method in which the first and second improvements discussed above are added to the driving method in Fig. 1. The improvements are particularly explained below with reference to Fig. 2.

In Fig. 2, the refrigerant gas flows from tank 1 and is passed through pipes 5 provided with check valves 9, and enters into preliminary regulators 13 and 14. The preliminary regulators 13 and 14 are of the same structure as those of the refrigerant regulators 3 and 4 already mentioned above, and are operated in the same manner as the refrigerant regulators 3 and 4. More particularly, the preliminary regulators 13 and 14 are heat exchangers provided with electro-magnetic valves 16 and 17 at the inlets and outlets thereof, respectively, for producing a pressure difference in the refrigerant gas. During operation, valve 17 is at first closed while valve 16 is opened, and a refrigerant gas, for example, FREON 13 B 1 at 14°C, is supplied to the preliminary regulators 13 and 14. Valve 16 is then closed to confine the FREON 13 B 1 between valves 16 and 17, and the FREON 13 B 1 is then heated to 15°C by a suitable medium, such as ambient water at 16°C, While the FREON 13 B 1 is held at a constant volume between valves 16 and 17. After the FREON 13 B 1 has been heated, valve 17 is opened to send the refrigerant gas to a condenser 15. Several preliminary regulators in addition to preliminary regulators 13 and 14 may be provided in a parallel relation, and the preliminary regulators are designed to open and close the valves 16 and 17 thereof intermittently at different times from the other preliminary regulators. The refrigerant gas flowing from the preliminary regulators thus forms a uniform stream.

Check valves are also provided between condenser 15 and preliminary regulators 13 and 14, and when the valves 16 and 17 are opened, the refrigerant gas cannot flow in a reverse direction. Thus the refrigerant gas is gathered and stored in the condenser 15. In case of FREON 13 B 1, the gas is stored in the condenser under a pressure, for example, of 14kg/cm² at 16°C. Since the condenser is formed to have a large volume, a large amount of the refrigerant gas can be stored therein. The refrigerant gas, therefore, can flow from the condenser 15 to the prime mover 2 in the form of a stable and uniform stream. Accordingly, the prime mover 2 can be driven in a steady state, without experiencing pulsatory motion.

In Fig. 2, an evaporator 18 is further provided downstream from the expansion valve 11 at the forward end of the prime mover 2 in order to maintain the forward end under a lower pressure. Since the evaporator 18 has a large volume, the refrigerant gas, the pressure of which has been decreased by the expansion valve 11, is further expanded, resulting in a further decreased pressure. In the event that use is made of FREON 13 B 1 as the refrigerant gas, the pressure of the refrigerant gas is decreased to about 10kg/cm² in the evaporator 18. Since such a great decrease in pressure occurs in the evaporator 18, the refrigerant gas advances smoothly from the evaporator 18.

When supplied into the evaporator 18, the refrigerant gas decreases not only in pressure but also in temperature. In the event that use is made of FREON 13 B 1 as the refrigerant gas, the refrigerant gas may undergo a temperature decrease of about 6°C in the evaporator 18. Thus the evaporator 18 sometimes contains a large amount of the refrigerant gas at a low temperature, which may be used as a cooling source for cooling water.

According to the first improvement in the present invention, the refrigerant gas flows from the tank 1 and enters into the preliminary regulators 13, 14, wherein the refrigerant gas is held at a constant volume and heated to increase the pressure thereof. Moreover, the refrigerant gas having its pressure thus increased is stored in a large amount in the condenser 15, and the stored refrigerant gas is then supplied into the prime mover. Therefore, refrigerant gas having a higher pressure can be supplied more stably to the prime mover, when compared with the case wherein the refrigerant gas is supplied directly into the prime mover. Thus, it becomes possible for the prime mover to be driven more effectively and smoothly.

According to the second improvement in the present invention, refrigerant gas is discharged under a low pressure from the prime mover and enters into the evaporator 18, wherein the refrigerant gas is expanded to a further decreased pressure. The refrigerant gas can therefore be advanced, smoothly from the evaporator 18, and it becomes possible for the prime mover to be driven more effectively and smoothly. Moreover, since the refrigerant gas is expanded at a low temperature and a large amount of the refrigerant gas becomes stored in the evaporator, the refrigerant gas can be heated beforehand in the evaporator 18 prior to being discharged into the refrigerant regulators. As a result, the time required for heating the refrigerant gas in the refrigerant regulators 3 and 4 can be reduced.

Furthermore, when the first improvement is combined with the second improvement, the advantages separately mentioned above contribute together to the operation of the prime mover, and the prime mover can thus be driven more smoothly and effectively.

Method for Generating Electric Power

When the prime mover is continuously driven as mentioned above, an electric generator is connected with the prime mover and electric power can be generated by the generator. Moreover, when electric power is generated, batteries may be connected to the generator and the generated electric power can be stored in the batteries. Alternatively, water can be heated by the generated electric power to obtain hot water, or a compressor can be set into motion by the electric power to circulate another refrigerant gas, whereby water of both higher and lower temperatures can be obtained. Furthermore, the electric power may be used as energy sources for lighting, setting various electric apparatus to work, and so on.

Additionally, if the hot water obtained by heating water with the generated electric power is further supplied to the preliminary regulators to elevate the pressure of the refrigerant gas; which is subsequently supplied into the prime mover, then an even greater conservation of power for assisting the driving force can be realized.

Method for Obtaining Hot or Cold Water

According to the method of the present invention for generating electric power, the power thus generated may be further used for heating water. According to the method improved by the second improvement discussed above, cold water may be obtained by utilizing the low temperature of the refrigerant gas produced as a result of expansion in the evaporator.

Among these, a method for obtaining hot water is first explained below. In the driving method shown in Fig. 2 an electric generator may be connected with the prime mover 2 to generate electric power, which may be used for heating water to obtain hot water. Thus water, for example, at $16\,^\circ$C, can be heated to a temperature of 45-$55\,^\circ$C.

A method for obtaining hot water according to the present invention comprises causing refrigerant gas contained in a tank under pressure to flow into pipes provided with check valves, entering the refrigerant gas into preliminary regulators, wherein the refrigerant gas while being held at a fixed volume is heated to elevate the pressure thereof, storing a large amount of the refrigerant gas having an elevated pressure, temporarily in a condenser, subsequently passing the refrigerant gas into a prime mover, introducing the refrigerant gas discharged under a low pressure from the prime mover into refrigerant regulators, wherein the refrigerant gas while being held at a fixed volume is heated to an elevated pressure which is a little higher than the aforementioned high pressure, returning the refrigerant gas to the tank while at the elevated pressure, thus circulating the refrigerant gas from the tank and back to the tank through the preliminary regulators, condenser, prime mover and refrigerant regulators to drive continuously the prime mover, connecting an electric generator to the prime mover to set the generator to work generating electric power, and heating water with the generated electric power.

Cold water can be obtained by the below-mentioned operations. In the driving method shown in Fig. 2, evaporator 18 is made to have a large volume into which the refrigerant gas is admitted, and is further provided therein with pipes 20, which are bent in a zigzag form or extended in a parallel relation, through which water flows to carry out heat exchange between the water and refrigerant gas. Thus, the water which flows through pipes 20 is cooled by the refrigerant gas and thereby attains a low temperature. In the case where FREON 13 1 B is used as the refrigerant gas, water at $16\,^\circ$C which enters into the inlet of pipes 20 can be cooled to about $6\,^\circ$C while flowing through the pipes 20 toward the outlet thereof.

The method for obtaining cold water can be summarized as a method which comprises causing refrigerant gas contained under a high pressure in a tank to flow into pipes provided with check valves, passing the refrigerant gas into a prime mover, introducing the refrigerant gas discharged under a low pressure from the prime mover into an evaporator, wherein the refrigerant gas is expanded to acquire a decreased pressure and temperature and is stored in a large amount, subsequently introducing the refrigerant gas at the decreased pressure into refrigerant regulators, wherein the refrigerant gas while being held at a fixed volume is heated to an elevated pressure which is a little higher than the aforementioned high pressure, returning the refrigerant gas to the tank while at the elevated pressure, thus circulating the refrigerant gas from the tank and back to the tank through the prime mover, evaporator, and refrigerant regulators to drive continuously the prime mover, and passing water into the evaporator to carry out heat exchange between the water and the refrigerant gas for cooling the water.

In the method according to the present invention, use can be made of a turbine or piston as the prime mover. An electric generator may be further connected with the turbine or piston to generate electric power, which can be used for various purposes. For example, the generated power may be stored in a battery, used for lighting, or as a driving source, or a heating source.

In the present invention, use can be made of various materials bearing the name "FREON" as the refrigerant gas. For example, use can be made of FREON 116 (chemical formula $CF_3$ - $CF_3$), FREON 502 (a mixture of $CHClF_2$ and $CClF_2$ - $CF_3$), FREON 22 ($CHClF_2$) and FREON 23 ($CHF_3$), in addition to FREON 13 B 1.

In the present invention, electro-magnetic valves 6, 7, 16, 17 etc., in the regulators are alternately opened and closed for short periodic intervals. For example, the electro-magnetic valves 6 and 7 in one of the refrigerant regulators 3 are opened and closed so as to complete one cycle in about 15 seconds, beginning from the time of entry of the refrigerant gas into the regulators including a heating cycle, and ending with the discharging of the refrigerant gas from the regulator. A computer may be employed for smoothly opening and closing these valves. In order to operate the computer, use must be made of electric power supplied from an outside source, however, with the exception of this electric power, additional outside sources of electric power are not required for carrying out the method. In addition, the electric power for operating the computer may be supplied by a battery connected to the electric generator.

According to the present invention, since the prime mover is driven by taking advantage of a pressure change of the refrigerant gas due to temperature varied in the vicinity of room temperature, it becomes possible for a prime mover, such as a turbine or piston, to be set to work using the temperature of ambient air or water as an energy source. In this case, the prime mover can be set to work simply and effectively using an apparatus of small size without producing noises and unpleasant gases, because fuels such as coal or petroleum are not used.

Moreover, it becomes possible to generate electric power, if only an electric generator is connected with the prime mover. Thus generated power may be further used for lighting, setting to work household electric appliances, obtaining cold or hot water, and driving general machines.

Furthermore, the method according to the present invention can be carried out using an apparatus of small size which can be set in motion without difficulty, and the method can be practiced by setting the apparatus on ships, cars and so on. Especially, since the method according to the invention requires no combustible fuels, it can be carried out in safety even in places where fire is not permitted, and hence the present invention makes great contributions to various industries. The present invention brings about such advantages as mentioned above.

The present invention is particularly explained below by way of the following working example.

### EXAMPLE:

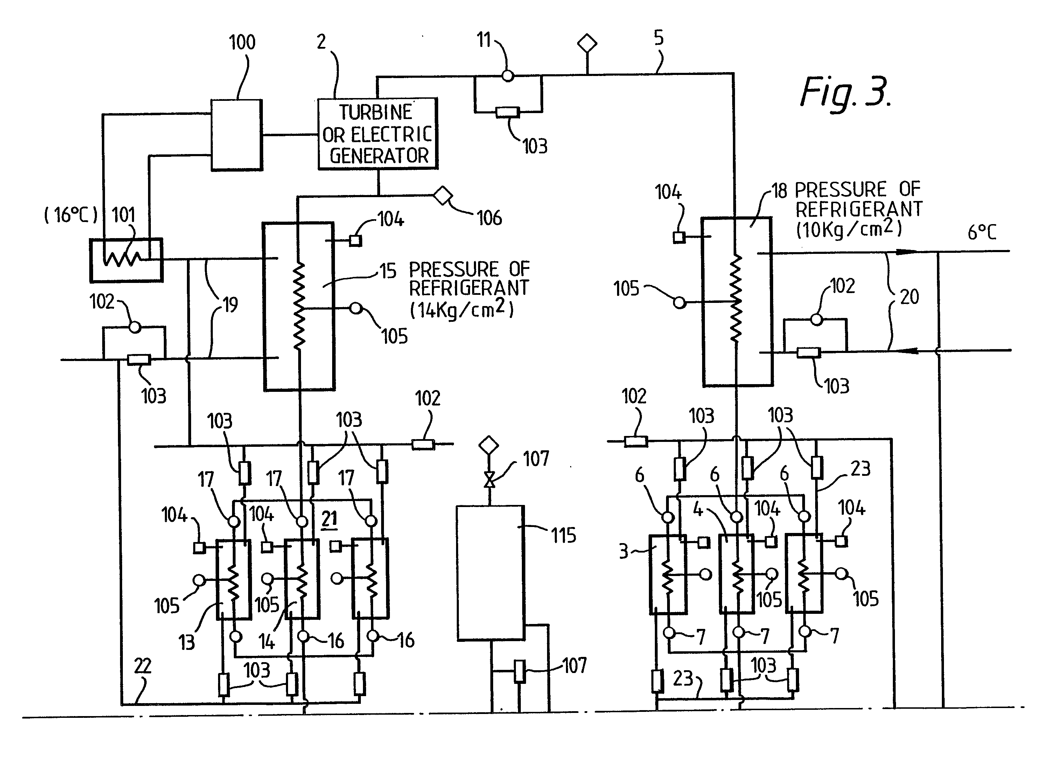

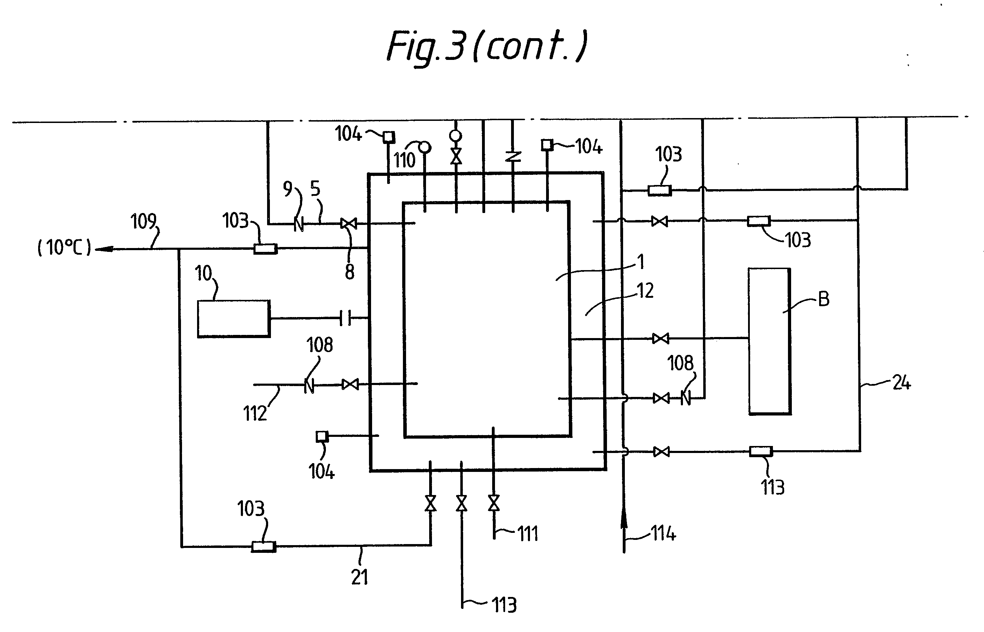

In this example, the method according to the present invention was conducted as shown in Fig. 3.

Use was made of tank 1 having a volume of 22 liters and outer tank 12 completely surrounding tank 1 and forming a space of 60 liters surrounding the outside of tank 1. At first, tank 1 and outer tank 12 were evacuated and liquid oxygen was then introduced into outer tank 12. The inside of tank 1 was thus cooled to -60°C.

Tank 1 was then connected with a vessel B containing FREON 13 B 1 ($CBrF_3$), which was supplied into tank 1 in a liquid state until it accounted for half of the total volume of tank 1. Tank 1 was then disconnected from vessel B, the liquid oxygen was removed from the outer tank 12, and in its place water at 16°C was supplied into the outer tank 12 from a water supply tank 10 to warm tank 1 and to evaporate the FREON 13 B 1.

All air contained in pipes 5 was evacuated therefrom together with the air contained in all of the other vessels and instruments connected by the pipes 5, and valve 8 was opened to allow the refrigerant gas to flow into pipes 5 from tank 1. The refrigerant gas had a temperature of 14°C when supplied into pipes 5 from the tank 1.

The refrigerant gas was prevented from flowing backward by check valves 9, and was advanced towards preliminary regulators 13 and 14. The preliminary regulators 13 and 14 were formed by a double pipe having an inner volume of 0.8 liter, a total of 16 preliminary regulators was provided with electro-magnetic valves 16 and 17 at the inlet and outlet thereof, respectively, for producing a pressure difference in the refrigerant gas, and these valves were controlled to open and close in sequential order. The space between the outer and inner pipes in the double pipe was connected to a water passage 22 and employed as a passage for a heating the refrigerant gas. The outer surface of the inner pipe was provided with plates for increasing the heating surface thereof.

Each of the preliminary regulators was designed to close valve 17 and open valve 16 to allow entry of the refrigerant gas, then to close valve 16 to heat the refrigerant gas, and thereafter to open valve 17 to send the refrigerant gas into the condenser 16. The condenser 15 had a capacity of 41.44 liters and a heat exchange area of

14.92m$^2$. Water at 16°C was supplied into the water passage 22 to heat the refrigerant gas, and was discharged therefrom at 14°C. A total of 16 preliminary regulators 13 and 14 were installed and operated sequentially, each having a cycle of about 15 seconds, thereby discharging the refrigerant gas at a temperature of 16°C and pressure of 14kg/cm$^2$. The refrigerant gas was then stored in condenser 15. Check valves were also provided in the pipes connecting the preliminary regulators 13 and 14 to the condenser 15 for preventing the refrigerant gas from flowing backward toward the preliminary regulators.

The condenser 15 was provided with a water passage 19 for carrying out heat exchange, in addition to allowing further heating of the condenser 15 by water, if necessary. Since the refrigerant gas was stored under a pressure of 14kg/cm$^2$ in the condenser 15, the gas was used to rotate the turbine 2 and was subsequently sent to the evaporator ls via expansion valve 11. At this time, the refrigerant gas was expanded adiabatically, thus lowering the pressure and temperature thereof, resulting in a pressure of 10kg/cm$^2$ and a temperature of 6°C.

An evaporator 18, having a capacity of 93.2 liters and a surface area of 22.17cm$^2$, was provided therein with a number of water pipes 20 extending mutually in parallel. The refrigerant gas contained in the evaporator 18 was heated by water flowing through water pipes 20, and was advanced to the refrigerant regulators 3 and 4. Water at 16°C was supplied into the water pipes 20 in the evaporator 18 and was discharged therefrom as cooled water having a temperature of 6°C.

Refrigerant regulators 3 and 4, having a structure similar to that of the preliminary regulators 13 and 14 and acting in the same manner as heat exchangers were employed. That is, the refrigerant regulators 3 and 4 were employed for elevating the pressure of the refrigerant gas by heating the refrigerant gas while being maintained at a fixed volume. Each of the refrigerant regulators 3 and 4 had a capacity of 0.8 liters, and a total of 16 refrigerant regulators were set in parallel relation to work sequentially, each having a cycle of 15 seconds. Each of the refrigerant regulators was constructed by a double pipe comprising inner and outer pipes, and the refrigerant gas was passed through the inside of the inner pipes while water flowed through the outer. pipe along the outside of the inner pipe, thus carrying out heat exchange. The inner pipe was provided with electro-magnetic valves 6 and 7 at the inlet and outlet thereof, respectively, and when the inner pipe was filled with the refrigerant gas, valves 6 and 7 were closed to confine a fixed amount of the refrigerant gas in the inner pipe, which was then heated by the water flowing through water passage 23 to elevate the pressure thereof. Thus, the refrigerant gas attained a pressure of 15kg/cm$^2$ and a temperature of 16°C, and could be returned to tank 1 when valve 7 was opened.

Preliminary regulators 13, 14 and refrigerant regulators 3, 4 were provided with temperature sensors and refrigerant sensors, for detecting the temperature of the water and the temperature and pressure of the refrigerant gas flowing therein, respectively, and thereby to automatically open or close electromagnetic valves 16, 17 and 6, 7 in response to the detection of predetermined temperature and pressure values.

As a result, the refrigerant gas was discharged from tank 1 and returned back to tank 1, and in this process the refrigerant gas was passed through pipes 5, through the preliminary regulators 13 and 14, condenser 15, turbine 2, expansion valve 11, evaporator 18, and refrigerant regulators 3 and 4. That is, the refrigerant gas could be circulated, and during this circulation the refrigerant gas was employed for continuously driving the turbine 2.

When an electric generator was connected to the turbine 2, the generator was set in motion to generate electric power of 3kW/H. The generated power was stored in a battery. The turbine 2 used herein had small dimensions, i.e. having an outside diameter of 60mm and a length of 80mm. A portion of the power taken out from the battery was used for heating water. Hot water thus obtained had a temperature of 55°C. A portion of the hot water was also supplied to condenser 15 through water passage 19 and was thus used for heating the refrigerant gas in the condenser. Another portion of the hot water was supplied into preliminary regulators 13 and 14 through water passage 22 and was used for elevating the pressure of the refrigerant gas. Thus, hot water at 55°C could be obtained from the water passage 19 and cold water at 6°C could be obtained from the water passage 20 extending through the evaporator 18.

As a result, the turbine could be driven using the temperature of ambient water as an energy source, and further cold water could be obtained, electric power could be generated by the driven turbine, and also hot water could be obtained by heating water with the generated power.

Since the turbine 2 was small as mentioned above, an apparatus required for carrying out the method of the present invention could likewise be of a small volume. For example, the apparatus required for obtaining a power of about 3kW/H could be installed within the volume of a cube measuring a side of 80cm.

In this example, water at 16°C was supplied to three separate systems, the first of which was supplied from water supply tank 10, passed through outer tank 12, then through water passage 24, further through water passage 23, and supplied into refrigerant regulators 3, 4 etc. wherein it was used for heating the refrigerant gas, and thereafter the water was supplied into outer tank 12, and at last Was discharged at a temperature of 10° C.

The second system was a cold water system, in which water, for example, at 16° C was passed through water passage 20 and supplied into evaporator is, where it was used for heating the refrigerant gas, and at last was discharged as cold water having a temperature of 6° C.

The third system was a hot water system. In this system, water at 16° C was at first passed through water passage 22 and supplied into preliminary regulators 13, 14 etc. where it was used for heating the refrigerant gas and discharged therefrom at a slightly lowered temperature of 14° C. Thereafter, the water was heated by the electric power generated by the electric generator and thereby acquired a higher temperature. The water was then supplied into the preliminary regulators to heat the refrigerant gas, and subsequently passed through water passage 19 and supplied into condenser 15, wherein the water served to elevate the temperature of the refrigerant gas. The water heated in the third system acquired a temperature of between 45-55° C.

The water for these systems was stored separately in tanks, and could be taken out therefrom and used as desired.

In Figure 3 certain parts are denoted as follows:

100 Battery
101 Heater
102 Controlling valve
103 Electromagnetic valve
104 Temperature sensor
105 Refrigerant sensor
106 Pressure sensor
107 Safety valve
108 Check valve
109 Drainage
110 Pressure gauge
111 Refrigerant charge pipe
112 Refrigerant discharge pipe
113 Discharge pipe
114 External energy feeding pipe (16° C water)
115 Safety tank

## Claims

1. A method of driving a prime mover comprising the steps of:
causing refrigerant fluid contained under a high pressure in a tank to flow into pipes provided with check valves, hence passing the refrigerant fluid into the prime mover, introducing the refrigerant fluid discharged at a low pressure from the prime mover into refrigerant regulators, wherein the refrigerant fluid, while at a fixed volume, is heated to attain an elevated pressure which is higher than said high pressure, and returning the refrigerant fluid to the tank while at said elevated pressure, thus continuously driving the prime mover.

2. A method according to claim 1, further comprising, between the steps of passing the refrigerant gas into a prime mover and of introducing the refrigerant fluid into refrigerant regulators, introducing the refrigerant fluid discharged under a low pressure from the prime mover into an evaporator, wherein the refrigerant fluid is expanded to a lesser pressure and a large amount of the refrigerant fluid is temporarily stored.

3. A method according to claim 1 or 2, further comprising, between the steps of causing the refrigerant fluid to flow into pipes and of passing the refrigerant fluid into the prime mover, the steps of introducing the refrigerant fluid into preliminary regulators; heating the refrigerant fluid, while at a fixed volume, to an elevated pressure, temporarily storing in a condenser a large amount of the refrigerant fluid at the elevated pressure; connecting an electric generator to the prime mover for generating electric power; and heating water with the generated power.

4. A method according to claim 3, for generating electric power further comprising the step of introducing the heated water into the preliminary regulators to heat the refrigerant fluid to an elevated temperature, and thereby increase the pressure of the refrigerant fluid.

5. A method of generating electric power comprising a method according to any one of the preceding claims and the further step of connecting an electric generator to the prime mover for generating electric power.

6. A method of cooling water, comprising a method according to claim 2, and the further step of passing water into the evaporator to carry out heat exchange between the water and the refrigerant gas to cool the water.

7. A method of heating or cooling water, comprising a method according to any one of claims 1 to 4, and the further steps of connecting an electric generator to the prime mover for generating electric power, and supplying said electric power to a heater or a refrigerator for heating or cooling water supplied to said refrigerator or said heater.

# Fig. 1.

Fig. 2.

Fig. 3.

EP 0 392 801 A2

Fig.3 (cont.)